# FASCICULE DE BREVET EUROPEEN

(11) **EP 3 956 657 B1**
(45) Date de publication et mention de la délivrance du brevet: **07.01.2026**
(21) Numéro de dépôt: 20720026.2
(22) Date de dépôt: 17.04.2020
(51) Int. Cl.: G01N 27/90

(54) **DISPOSITIF DE CONTRÔLE D'UNE SOUDURE D'UN ÉLÉMENT TUBULAIRE LONGITUDINAL CREUX**
VORRICHTUNG ZUR PRÜFUNG EINER SCHWEISSNAHT EINES ROHRFÖRMIGEN HOHLKÖRPERS
DEVICE FOR INSPECTING A WELD OF A HOLLOW LONGITUDINAL TUBULAR ELEMENT

(30) Priorité: 19.04.2019 FR 1904238
(43) Date de publication de la demande: 23.02.2022
(73) Titulaire: Framatome, 92400 Courbevoie (FR)
(72) Inventeur: COMBRET, Guillaume, 71380 Saint Marcel (FR); ROBLIN, Anthony, 71290 Ormes (FR); BOURGOIS, Stéphane, 71510 Aluze (FR)
(74) Mandataire: Lavoix
(86) Numéro de dépôt international: PCT/EP2020/060812
(87) Numéro de publication internationale: WO 2020/212550

(56) Documents cités:
- EP-A1- 0 775 911
- EP-A2- 3 163 161
- WO-A1-2017/124194
- DE-A1- 3 102 992
- FR-A1- 3 069 060
- US-A- 4 672 852
- US-B2- 8 141 442

## Description

La présente invention concerne selon un premier aspect un dispositif de contrôle d'une soudure d'un élément tubulaire longitudinal creux.

Plus particulièrement, l'invention concerne un dispositif de contrôle d'une soudure d'un élément tubulaire par l'extérieur.

Par exemple, l'invention concerne un dispositif de contrôle de soudure pour des tuyaux ou ligne(s) de tuyauterie assurant la prise de mesures physiques (débit, pression) du circuit primaire d'un réacteur nucléaire. Ces tuyaux, encore appelés « tubing » en langue anglaise, sont présents dans le bâtiment réacteur. Ils sont de faible diamètre extérieur.

Par exemple, lors du remplacement d'un générateur de vapeur d'un réacteur nucléaire, il convient de remplacer une partie des tuyaux directement liés au générateur de vapeur. Une fois le remplacement du générateur de vapeur effectué, il est donc nécessaire d'opérer des contrôles au niveau des soudures de ces tuyaux.

Pour ce faire, il est connu d'utiliser un dispositif de contrôle par radiographie des soudures en utilisant des films photographiques et une source radioactive, par exemple de l'iridium 192. Ces contrôles sont longs et fastidieux. Cette technique implique également un nombre important de manipulations de sources radioactives. Les produits chimiques utilisés pour le développement des films doivent aussi faire l'objet de traitements spécifiques. De plus, les conditions d'intervention requièrent un personnel qualifié en radioprotection. Enfin, cette technique ne permet pas d'obtenir des résultats en temps réel.

US 8 141 442 B2 décrit un exemple de scanneur par courants de Foucault capable de se déplacer axialement le long d'un tuyau.

FR 3 069 060 A1 décrit également un outil d'inspection qui comporte une sonde à courants de Foucault et qui permet d'inspecter un tube métallique afin d'en détecter les éventuels défauts de surface.

WO 2017/124194 A1 décrit une bande et un échographe pour l'inspection de soudures circonférentielles de pipelines. La bande et l'échographe sont conçus pour orienter les éléments dans la direction radiale définie par rapport au pipeline, ce qui permet de réduire l'encombrement de l'ensemble.

Un objectif de l'invention est de proposer un dispositif de contrôle qui permette de contrôler de manière précise, fiable, non destructive, facilement et rapidement un élément tubulaire creux, et qui soit particulièrement adapté au milieu nucléaire.

A cet effet, l'invention a pour objet un dispositif de contrôle selon la revendication 1.

Un tel dispositif permet une durée de contrôle réduite et une interprétation en temps réel des résultats. Les manipulations de produits chimiques et de sources radioactives sont évitées, ce qui diminue fortement les risques liés aux opérations de contrôle. Enfin, l'absence de source radioactive autorise une co-activité sur le site où se déroulent les contrôles.

Suivant des modes particuliers de réalisation, le dispositif de contrôle comprend l'une ou plusieurs des caractéristiques des revendications dépendantes 2 à 7.

L'invention concerne selon un deuxième aspect un procédé de contrôle d'une soudure d'un élément tubulaire longitudinal creux selon la revendication 8.

Suivant un mode particulier de réalisation, le procédé selon l'invention peut comprendre la caractéristique de la revendication 9.

D'autres caractéristiques et avantages de l'invention apparaîtront à la lecture de la description qui va suivre, donnée uniquement à titre d'exemple et faite en se référant aux dessins annexés, parmi lesquels :
- [Fig 1] la figure 1 est une vue générale en perspective d'un dispositif de contrôle selon l'invention ;
- [Fig 2] la figure 2 est une vue plus détaillée en perspective du dispositif d'entrainement en rotation de l'organe mobile du dispositif de contrôle de la figure 1 ;
- [Fig 3] la figure 3 est une vue détaillée en perspective du dispositif d'entrainement en translation longitudinale du support du dispositif de contrôle de la figure 1 ; et
- [Fig 4] la figure 4 est une vue détaillée en perspective du dispositif d'entrainement en rotation de l'organe mobile coopérant avec le dispositif d'entrainement en translation longitudinale du support du dispositif de contrôle de la figure 1.

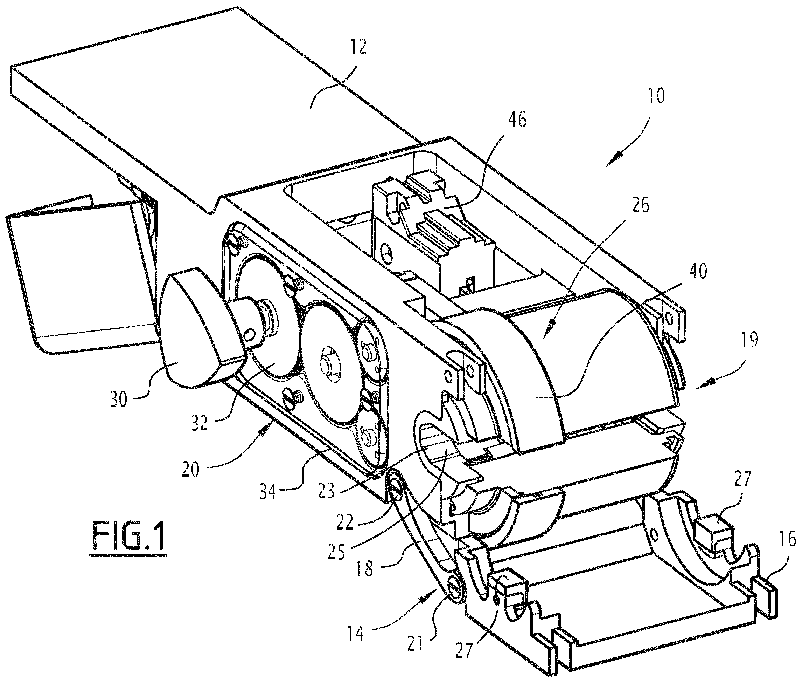

Un dispositif de contrôle 10 d'une soudure d'un élément tubulaire longitudinal creux (non représenté) selon l'invention est illustré sur la figure 1.

L'élément tubulaire creux est par exemple un tuyau de faible épaisseur en acier inoxydable austénitique présent dans un bâtiment réacteur de centrale nucléaire.

Le diamètre externe de l'élément tubulaire est par exemple compris entre 8 mm et 20 mm. Le diamètre externe de l'élément tubulaire est de préférence de l'ordre de 9,5 mm. L'épaisseur de la paroi de l'élément tubulaire est inférieure à 2 mm et est préférentiellement de l'ordre de 1,65 mm.

Les faibles dimensions (diamètre, épaisseur) de l'élément tubulaire permettent à la fois des contrôles surfaciques mais aussi volumiques.

De manière générale, les deux types de contrôle, surfacique et volumique, sont susceptibles d'être réalisés sur les tuyaux présents dans le bâtiment réacteur.

La soudure est typiquement une soudure bout à bout entre deux éléments tubulaires creux.

Le dispositif de contrôle 10 comprend un châssis 12 et un système d'accroche et de verrouillage 14 dudit châssis 12 sur l'élément tubulaire visible plus particulièrement sur la figure 1.

Le système d'accroche et de verrouillage 14 est mobile entre une position ouverte dans laquelle l'élément tubulaire n'est pas maintenu dans le dispositif de contrôle 10, et une position fermée dans laquelle l'élément tubulaire est maintenu dans le dispositif de contrôle 10.

Le système d'accroche et de verrouillage 14 comprend un organe de maintien 16 et deux biellettes 18 fixées respectivement à une première extrémité 21 à l'organe de maintien 16 et à une deuxième extrémité 22 au châssis 12. Au niveau de la première extrémité 21 de chacune des biellettes 18, la biellette 18 est mobile en rotation par rapport à l'organe de maintien 16 autour d'un premier axe de rotation. Au niveau de la deuxième extrémité 22 de chacune des biellettes 18, la biellette 18 est mobile en rotation par rapport au châssis 12 autour d'un deuxième axe de rotation sensiblement parallèle au premier axe de rotation.

Lorsque le dispositif de contrôle 10 est fixé sur l'élément tubulaire creux, les premier et deuxième axes de rotation sont sensiblement parallèles à la direction longitudinale de l'élément tubulaire creux.

Plus particulièrement, le système d'accroche et de verrouillage 14 comprend au moins un crochet de maintien 23, par exemple deux crochets de maintien 23, comme représenté sur la figure 1. Les crochets de maintien sont fixés sur le châssis 12.

Les crochets de maintien 23 définissent un logement de réception 25 de l'élément tubulaire.

L'organe de maintien 16 comprend respectivement deux organes de fixation 27 qui coopèrent avec les crochets de maintien 23 dans la position fermée.

Avantageusement, chaque organe de fixation 27 présente une forme complémentaire à celle du crochet de maintien 23. Ainsi, en position fermée, l'élément tubulaire est maintenu dans le logement de réception 25 défini par le crochet de maintien 23 et l'organe de fixation 27 de l'organe de maintien 16.

Ainsi, en opération, le système d'accroche et de verrouillage 14 permet d'enserrer l'élément tubulaire dans le dispositif de contrôle 10.

Préférentiellement, le système d'accroche et de verrouillage 14 comprend par exemple au moins un organe d'assemblage amovible (non représenté), par un exemple un boulon, de manière à fixer l'organe de maintien 16 sur le châssis 12.

Le système d'accroche et de verrouillage 14 permet de maintenir le dispositif de contrôle 10 fermement sur l'élément tubulaire et évite tout déplacement accidentel du dispositif 10 lors des opérations de mesure. Ceci contribue à améliorer la fiabilité et la précision des mesures réalisées sur l'élément tubulaire.

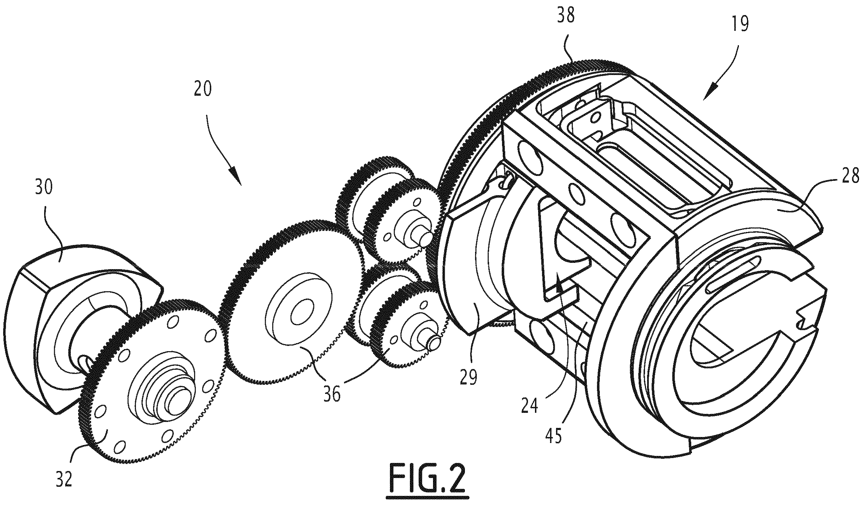

Plus particulièrement visible sur la figure 2, le dispositif de contrôle 10 comprend un organe mobile 19 lié au châssis 12, un dispositif d'entrainement en rotation 20 de l'organe mobile 19 par rapport au châssis 12, un support 29 comportant au moins un bloc capteur 24 à courants de Foucault lié à l'organe mobile 19, et un dispositif d'entrainement en translation longitudinale 26 dudit support 29.

L'organe mobile 19 comprend un manchon cylindrique 28 adapté pour entourer l'élément tubulaire. Quand le dispositif de contrôle 10 est fixé sur l'élément tubulaire, le manchon cylindrique 28 s'étend sensiblement selon la direction longitudinale de l'élément tubulaire.

Le manchon cylindrique 28 est monté glissant sur une face interne du crochet de maintien 23.

L'organe mobile 19 est mobile en rotation par rapport au châssis 12 autour de l'élément tubulaire. Plus particulièrement, lorsque le dispositif de contrôle 10 est fixé sur l'élément tubulaire, l'axe de rotation de l'organe mobile 19 est sensiblement confondu avec l'axe longitudinal de l'élément tubulaire.

Avantageusement, l'organe mobile 19 est mobile en rotation autour de l'élément tubulaire entre une pluralité de positions. Préférentiellement, les positions sont discrètes et stables.

La pluralité de positions est par exemple comprise entre dix et vingt-quatre, par exemple vingt-et-une.

Les positions sont par exemple régulièrement réparties angulairement autour du tube.

Préférentiellement, les positions sont réparties sur toute la périphérie du tube.

En variante, les positions sont réparties sur une partie de la périphérie du tube, par exemple sur une distance angulaire de 180°.

Ainsi, comme nous le verrons plus en détail dans la description, chaque déplacement en rotation de l'organe mobile 19 entraine le déplacement du support 29 comprenant le bloc capteur 24 à courants de Foucault autour de l'élément tubulaire.

Préférentiellement, le dispositif d'entrainement en rotation 20 est un dispositif à entrainement mécanique manuel.

Comme visible plus particulièrement sur la figure 2, le dispositif d'entrainement en rotation 20 comprend par exemple un organe de préhension 30 disposé en saillie du châssis 12 et fixé à un pignon d'entrainement 32. L'organe de préhension 30 est par exemple disposé sur une paroi latérale 34 du châssis 12 permettant de faciliter la préhension par l'utilisateur (figure 1).

Le dispositif d'entrainement en rotation 20 comprend en outre une pluralité de pignons 36 coopérant avec ledit pignon d'entrainement 32 et l'organe mobile 19, et plus particulièrement avec une bague dentée 38 fixée sur une extrémité de l'organe mobile 19.

Le dispositif d'entrainement en rotation 20 permet de déplacer l'organe mobile 19 de manière fiable et précise. Le dispositif d'entrainement en rotation 20 assure également une bonne répétitivité et une bonne reproductibilité de la position de l'organe mobile 19 autour de l'élément tubulaire. Ainsi, lorsque l'organe mobile 19 occupe la dernière position de la pluralité de positions, un déplacement supplémentaire de l'organe mobile 19 en utilisant le dispositif d'entrainement 20 entraîne l'organe mobile 19 à nouveau précisément dans la première position de la pluralité de positions.

Le dispositif de contrôle 10 comprend avantageusement un premier dispositif d'indexation (non représenté) configuré pour déterminer une position angulaire de l'organe mobile 19 autour de l'élément tubulaire.

Ainsi, en tout temps, la position angulaire de l'organe mobile 19 autour de l'élément tubulaire est connue précisément et est indexée à chacune des acquisitions du bloc capteur 24 à courants de Foucault. Ceci assure la reconstruction d'une image circonférentielle de l'élément tubulaire précise et de qualité.

Le support 29 est mobile en translation longitudinale par rapport à l'organe mobile 19.

En revanche, le support 29 est lié en rotation à l'organe mobile 19 autour de l'élément tubulaire.

Préférentiellement, le support 29 est mobile en translation entre une pluralité de positions par rapport à l'organe mobile 19.

Les positions sont préférentiellement discrètes et stables.

Par exemple, le support 29 est mobile entre une première position extrême de contrôle sur l'élément tubulaire et une deuxième position extrême de contrôle sur l'élément tubulaire.

La distance entre la première position extrême de contrôle et la deuxième position extrême de contrôle est comprise entre 30 mm et 50 mm.

Le support 29 est ainsi avantageusement déplacer entre une pluralité de positions entre la première position extrême de contrôle et la deuxième position extrême de contrôle. A chaque position, une mesure est effectuée avec le bloc capteur 24 à courants de Foucault.

Par exemple, le support 29 est déplacée d'un intervalle constant entre la première position extrême et la deuxième position extrême de contrôle.

L'intervalle est par exemple égal à 0,1 mm.

Par exemple, les positions sont séparées l'une de l'autre par un pas constant.

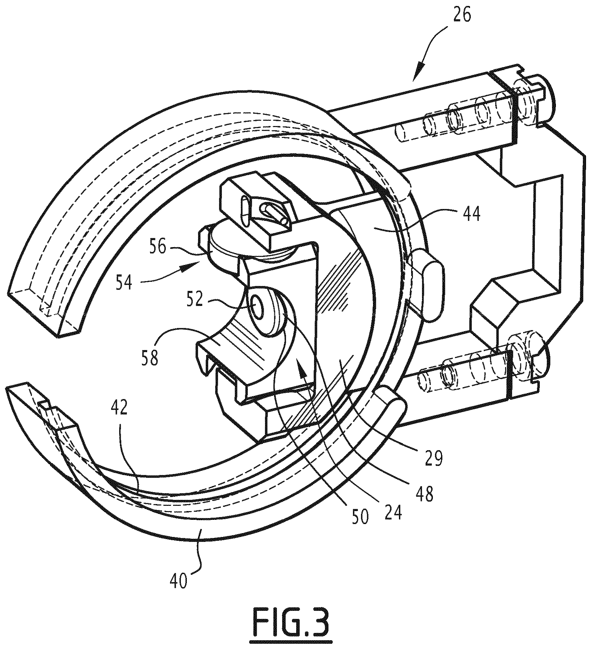

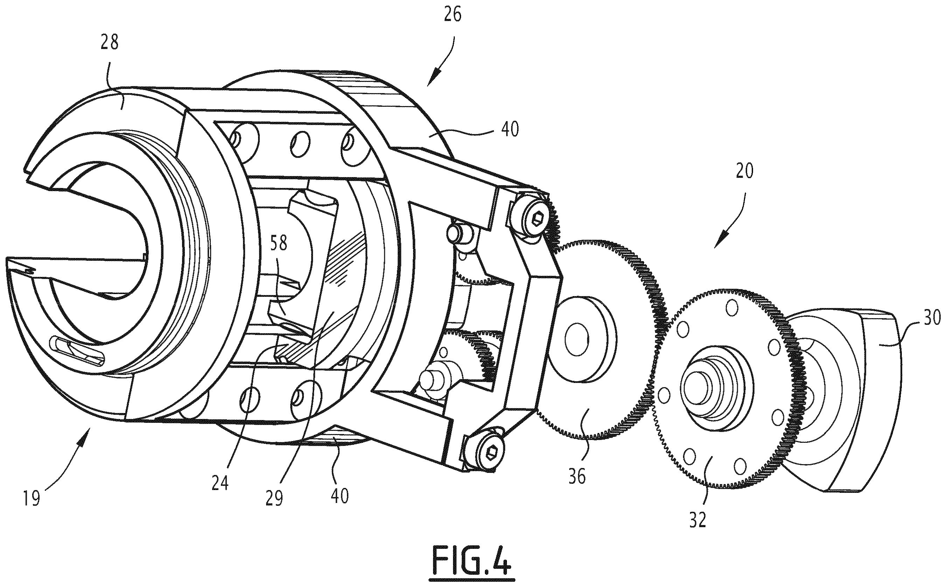

Comme visible en détail sur les figures 3 et 4, le dispositif d'entrainement en translation longitudinale 26 comprend par exemple un manchon cylindrique 40 entourant l'organe mobile 19 et un organe de maintien comprenant le bloc capteur 24 à courant de Foucault.

Le dispositif d'entrainement en translation 26 coopère avec le support 29.

Ainsi, par exemple, le manchon cylindrique 40 définit une gorge circonférentielle 42 et le support 29 comprend une glissière 44 coopérant avec la gorge circonférentielle 42 du manchon cylindrique 40.

Comme visible sur la figure 2, l'organe mobile 19 définit une fenêtre 45 à travers laquelle sort la glissière 44 coopérant avec la gorge circonférentielle 42.

L'organe mobile 19 définit au niveau de la fenêtre 45 une glissière longitudinale pour le support 29.

Le manchon cylindrique 40 est monté coulissant longitudinalement sur l'organe mobile 19.

Le manchon cylindrique 40 permet également de guider en rotation l'organe mobile 19.

Plus particulièrement, quand l'organe mobile 19 est en rotation autour du tube, la glissière 44 se déplace dans la gorge circonférentielle 42.

De plus, la gorge circonférentielle 42 coopère avec la glissière 44 pour entrainer le support 29 et donc le bloc capteur 24 à courants de Foucault longitudinalement.

Ainsi, le manchon cylindrique 40 entraine en translation longitudinale le support 29 comportant le bloc capteur 24 à courant de Foucault, le long de l'élément tubulaire.

Préférentiellement, le dispositif d'entrainement en translation longitudinale 26 du support 29 est un dispositif à entrainement mécanique manuel.

Par exemple, le dispositif d'entrainement en translation longitudinale 26 comprend en outre un organe de préhension 46 fixé sur le manchon cylindrique 40 et en saillie par rapport au châssis 12 (figure 1).

Le dispositif de contrôle 10 selon l'invention comprend préférentiellement un deuxième dispositif d'indexation (non représenté) configuré pour déterminer une position longitudinale du support 29 par rapport à l'organe mobile 19.

Ainsi, en tout temps, la position longitudinale du support 29 est connue précisément et est indexée à chacune des acquisitions du bloc capteur 24 à courants de Foucault. Ceci assure la reconstruction d'une image de l'élément tubulaire précise et de qualité.

Le bloc capteur 24 à courants de Foucault comprend un palpeur 48 comportant deux bobinages orthogonaux 50 l'un par rapport à l'autre et montés sur un cube de ferrite 52 (figure 3).

Les bobinages 50 sont par exemple alimentés en mode différentiel. Le bloc capteur 24 à courants de Foucault est ainsi insensible à l'orientation des défauts potentiels au niveau de la soudure de l'élément tubulaire. Lors d'une mesure, la variation d'impédance des bobinages 50 est analysée le long de l'élément tubulaire et tout autour de l'élément tubulaire. Cette mesure permet de cartographier en deux dimensions la soudure de l'élément tubulaire. L'analyse de cette cartographie permet de détecter éventuellement la présence de discontinuités au niveau de la soudure.

Le bloc capteur 24 à courants de Foucault comprend avantageusement en outre un dispositif de saturation magnétique 54 permettant d'uniformiser la perméabilité magnétique de la soudure.

Par exemple, le dispositif de saturation magnétique 54 comprend deux aimants 56 orientés dans le même sens. Les deux aimants 56 sont destinés à être disposés de part et d'autre de l'élément tubulaire à contrôler et plus particulièrement au niveau de la soudure.

Avantageusement, le bloc capteur 24 à courants de Foucault comprend en outre un dispositif de maintien 58 du palpeur 48 sur la surface de l'élément tubulaire.

Le dispositif de maintien 58 permet de s'assurer que le palpeur 48 est toujours en contact avec la surface de l'élément tubulaire et celle de la soudure même lorsque la surface extérieure de l'élément tubulaire ou de la soudure est irrégulière.

Le dispositif de contrôle 10 comprend typiquement une unité d'acquisition (non représentée) connectée au bloc capteur 24 à courants de Foucault et aux premier et deuxième dispositifs d'indexation afin d'asservir les mesures du bloc capteur 24 à courants de Foucault à sa position par rapport à la soudure (position angulaire autour de l'élément tubulaire et position longitudinale le long de l'élément tubulaire).

Typiquement, les mesures sont transférées vers une unité de traitement (non représentée) comme par exemple un microordinateur pour traitement. Le transfert est par exemple filaire.

Un procédé de contrôle d'une soudure d'un élément tubulaire longitudinal creux en utilisant le dispositif de contrôle 10 décrit plus haut va maintenant être décrit.

Tout d'abord, le procédé comprend une étape d'accrochage et de verrouillage du châssis 12 du dispositif de contrôle 10 sur l'élément tubulaire, et plus particulièrement au niveau de la soudure à contrôler, en utilisant le dispositif d'accroche et de verrouillage 14.

Le procédé comprend alors par exemple une étape consistant à déplacer au moins une fois l'organe mobile 19 en rotation par rapport au châssis 12 autour de l'élément tubulaire, en utilisant le dispositif d'entrainement en rotation 20 et/ou déplacer au moins une fois le support 29 en translation longitudinale par rapport à l'organe mobile 19, le long de l'élément tubulaire. Ainsi, le bloc capteur 24 à courants de Foucault est déplacé dans une position qui correspond à la première position extrême de contrôle.

Une première mesure est effectuée avec le bloc capteur 24 à courants de Foucault en utilisant l'unité d'acquisition.

Le procédé comprend préférentiellement, pour une position angulaire définie, déplacer en translation longitudinale le support 29 dans une pluralité de positions longitudinales successives, depuis la première position extrême de contrôle jusqu'à la deuxième position de contrôle. Chaque position longitudinale est séparée de la position précédente par un intervalle.

Une mesure est effectuée avec le bloc capteur 24 à courants de Foucault pour chacune des positions longitudinales.

Lorsque le support 29 atteint la deuxième position extrême de contrôle, le support 29 est déplacée par translation longitudinale vers la première position extrême de contrôle en une unique translation longitudinale.

L'organe mobile 19 est alors déplacé en rotation par rapport au châssis autour de l'élément tubulaire. Le support 29 est alors à nouveau déplacé en translation longitudinale entre la première position extrême de contrôle et la deuxième position extrême de contrôle dans la pluralité de positions longitudinales, et une mesure est effectuée avec le bloc capteur 24 à courants de Foucault pour chacune des positions, etc.

Les déplacements du support 29 et de l'organe mobile 19 sont répétés jusqu'à ce que le bloc capteur 24 à courants de Foucault effectue une rotation complète autour de l'élément tubulaire. Par rotation complète, on entend que le bloc capteur 24 à courants de Foucault retrouve sa position angulaire initiale après avoir effectué la pluralité de déplacements en rotation.

Préférentiellement, chaque mesure réalisée avec le bloc capteur 24 à courants de Foucault est transférée à l'unité d'acquisition puis à l'unité de traitement. L'unité de traitement est configurée pour reconstituer une cartographie en deux dimensions de l'élément tubulaire au niveau de la soudure.

Ainsi, toute discontinuité de la soudure peut être facilement et précisément identifiée par l'utilisateur.

Le dispositif de contrôle 10 selon l'invention est précis et fiable.

De plus, les dimensions du dispositif de contrôle 10 selon l'invention sont suffisamment réduites pour permettre le contrôle d'un élément tubulaire dans un environnement difficile d'accès, comme par exemple à proximité d'un mur. L'encombrement du dispositif 10 est avantageusement inscrit dans un cylindre de 70 mm occupant les trois-quarts de la circonférence de l'élément tubulaire. Le dispositif de contrôle 10 selon l'invention permet un contrôle surfacique mais aussi volumique de l'élément tubulaire.

## Revendications

1. Dispositif de contrôle (10) d'une soudure d'un élément tubulaire longitudinal creux comprenant :
- un châssis (12),
- un système d'accroche et de verrouillage (14) dudit châssis sur l'élément tubulaire, ledit système (14) étant destiné à éviter tout déplacement du dispositif (10) sur l'élément tubulaire,
- un organe mobile (19) lié au châssis (12) et mobile en rotation par rapport au châssis (12) autour de l'élément tubulaire,
- un dispositif d'entrainement en rotation (20) de l'organe mobile (19) par rapport au châssis (12),
- un support (29) comportant au moins un bloc capteur (24) à courants de Foucault lié à l'organe mobile (19), le support (29) étant mobile en translation longitudinale par rapport à l'organe mobile (19) et lié en rotation à l'organe mobile (19) autour de l'élément tubulaire,
- un dispositif d'entrainement en translation longitudinale (26) dudit support (29), dans lequel le dispositif d'entrainement en translation longitudinale (26) comprend un manchon cylindrique (40) entourant l'organe mobile (19), le manchon cylindrique (40) définissant une gorge circonférentielle (42), le support (29) comprenant une glissière (44) coopérant avec la gorge circonférentielle (42) du manchon cylindrique (40)..

2. Dispositif de contrôle (10) selon la revendication 1, dans lequel l'organe mobile (19) comprend un manchon cylindrique (28) adapté pour entourer l'élément tubulaire.

3. Dispositif de contrôle (10) selon la revendication 1 ou 2, dans lequel le dispositif d'entrainement en rotation (20) et/ou le dispositif d'entrainement en translation longitudinale (26) sont des dispositifs à entrainement mécaniques manuels.

4. Dispositif de contrôle (10) selon l'une quelconque des revendications 1 à 3, dans lequel le dispositif d'entrainement en rotation (20) de l'organe mobile (19) comprend un organe de préhension (30) disposé en saillie du châssis (12) et fixé à un pignon d'entrainement (32), et une pluralité de pignons (36) coopérant avec ledit pignon d'entrainement (32) et l'organe mobile (19) de manière à entrainer l'organe mobile (19) en rotation par rapport au châssis (12).

5. Dispositif de contrôle (10) selon l'une quelconque des revendications 1 à 4, dans lequel l'organe mobile (19) est mobile en rotation autour de l'élément tubulaire entre une pluralité de positions, la pluralité de positions étant comprise entre dix et vingt-quatre.

6. Dispositif de contrôle (10) selon l'une quelconque des revendications 1 à 5, comprenant en outre au moins un dispositif d'indexation configuré pour déterminer une position de l'organe mobile (19) autour de l'élément tubulaire

7. Dispositif de contrôle (10) selon l'une quelconque des revendications 1 à 6, dans lequel le support (29) est mobile en translation longitudinale par rapport à l'organe mobile (19) entre une pluralité de positions.

8. Procédé de contrôle d'une soudure d'un élément tubulaire longitudinal creux en utilisant un dispositif de contrôle (10) selon l'une quelconques des revendications 1 à 7, le procédé comprenant les étapes suivantes :
- accrocher et verrouiller le châssis (12) sur l'élément tubulaire en utilisant le dispositif d'accroche et de verrouillage (14),
- déplacer au moins une fois l'organe mobile (19) en rotation par rapport au châssis (12) autour de l'élément tubulaire dans une position angulaire, en utilisant le dispositif d'entrainement en rotation (20) et/ou déplacer au moins une fois le support (29) en translation longitudinale par rapport à l'organe mobile (19) dans une position longitudinale, le long de l'élément tubulaire,
- acquérir une mesure en utilisant le bloc capteur (24) à courants de Foucault.

9. Procédé selon la revendication 8, comprenant, pour chaque position angulaire, déplacer successivement en translation longitudinale le support (29) le long de l'élément tubulaire dans une pluralité de positions longitudinales depuis une première position extrême de contrôle jusqu'à une deuxième position extrême de contrôle.

## Patentansprüche

1. Prüfvorrichtung (10) einer Schweißnaht eines hohlen, länglichen, rohrförmigen Elements, umfassend:
- einen Rahmen (12),
- ein Einhänge- und Verriegelungssystem (14) des Rahmens an dem rohrförmigen Element, wobei das System (14) dazu bestimmt ist, eine Bewegung der Vorrichtung (10) auf dem rohrförmigen Element zu verhindern,
- ein bewegbares Organ (19), das mit dem Rahmen (12) verbunden und in Bezug auf den Rahmen (12) um das rohrförmige Element drehbar ist,
- eine Drehantriebsvorrichtung (20) des bewegbaren Organs (19) in Bezug auf den Rahmen (12),
- einen Träger (29), umfassend mindestens einen Wirbelstrom-Sensorblock (24), der mit dem bewegbaren Organ (19) verbunden ist, wobei der Träger (29) in Bezug auf das bewegbare Organ (19) in Längsrichtung translatorisch bewegbar und mit dem bewegbaren Organ (19) um das rohrförmige Element drehbar verbunden ist,
- eine Längsverschiebung-Antriebsvorrichtung (26) des Trägers (29), wobei die Längsverschiebung-Antriebsvorrichtung (26) eine zylindrische Hülse (40) umfasst, die das bewegbare Organ (19) umgibt, wobei die zylindrische Hülse (40) eine umlaufende Nut (42) definiert, der Träger (29) umfassend eine Gleitschiene (44), die mit der Umfangsnut (42) der zylindrischen Hülse (40) zusammenwirkt.

2. Prüfvorrichtung (10) nach Anspruch 1, wobei das bewegbare Organ (19) eine zylindrische Hülse (28) umfasst, die angepasst ist, um das rohrförmige Element zu umgeben.

3. Prüfvorrichtung (10) nach Anspruch 1 oder 2, wobei die Drehantriebsvorrichtung (20) und/oder die Längsverschiebung-Antriebsvorrichtung (26) manuell mechanisch angetriebene Vorrichtungen sind.

4. Prüfvorrichtung (10) nach einem der Ansprüche 1 bis 3, wobei die Drehantriebsvorrichtung (20) des bewegbaren Organs (19) ein Greiforgan (30) umfasst, das hervorstehend am Rahmen (12) angeordnet und an einem Antriebsritzel (32) befestigt ist, und eine Vielzahl von Zahnrädern (36) mit dem Antriebsritzel (32) und dem bewegbaren Organ (19) zusammenwirken, um das bewegbare Organ (19) in Bezug auf den Rahmen (12) in Drehung zu versetzen.

5. Prüfvorrichtung (10) nach einem der Ansprüche 1 bis 4, wobei das bewegbare Organ (19) um das rohrförmige Element zwischen einer Vielzahl von Positionen drehbar ist, wobei die Vielzahl von Positionen zwischen zehn und vierundzwanzig liegt.

6. Prüfvorrichtung (10) nach einem der Ansprüche 1 bis 5, ferner umfassend mindestens eine Indexierungsvorrichtung, die konfiguriert ist, um eine Position des bewegbaren Organs (19) um das rohrförmige Element herum zu bestimmen.

7. Prüfvorrichtung (10) nach einem der Ansprüche 1 bis 6, wobei der Träger (29) in Bezug auf das bewegbare Organ (19) zwischen einer Vielzahl von Positionen in Längsrichtung verschiebbar ist.

8. Prüfverfahren einer Schweißnaht eines hohlen, länglichen, rohrförmigen Elements unter Verwendung einer Prüfvorrichtung (10) nach einem der Ansprüche 1 bis 7, das Verfahren umfassend die folgenden Schritte:
- Einhängen und Verriegeln des Rahmens (12) an dem rohrförmigen Element unter Verwendung der Einhänge- und Verriegelungsvorrichtung (14),
- mindestens einmal Drehen des bewegbaren Organs (19) in Bezug auf den Rahmen (12) um das rohrförmige Element in einer Winkelposition unter Verwendung der Drehantriebsvorrichtung (20), und/oder mindestens einmal Längsverschieben des Trägers (29) in Bezug auf das bewegbare Organ (19) in eine Längsposition entlang des rohrförmigen Elements,
- Erfassen einer Messung unter Verwendung des Wirbelstrom-Sensorblocks (24).

9. Verfahren nach Anspruch 8, umfassend für jede Winkelposition ein aufeinanderfolgendes Verschieben des Trägers (29) in Längsrichtung entlang des rohrförmigen Elements in eine Vielzahl von Längspositionen von einer ersten extremen Prüfposition zu einer zweiten extremen Prüfposition.

## Claims

1. An inspection device (10) for a weld of a hollow longitudinal tubular element comprising:
- a chassis (12),
- a hooking and locking system (14) for said chassis on the tubular element, said system (14) being designed to prevent any movement of the device (10) on the tubular element,
- a movable member (19) connected to the chassis (12) and rotatable relative to the chassis (12) around the tubular element,
- a rotational drive device (20) for the movable member (19) relative to the chassis (12),
- a support (29) including at least one sensor block (24) with eddy currents connected to the movable member (19), the support (29) being translatable in the longitudinal direction relative to the movable member (19) and connected in rotation to the movable member (19) around the tubular element.
- a longitudinal translation drive device (26) for said support (29), wherein the longitudinal translation drive device (26) comprises a cylindrical sleeve (40) surrounding the movable member (19), the cylindrical sleeve (40) defining a circumferential groove (42), the support (29) comprising a slide (44) cooperating with the circumferential groove (42) of the cylindrical sleeve (40).

2. The inspection device (10) according to claim 1, wherein the movable member (19) comprises a cylindrical sleeve (28) adapted to surround the tubular element.

3. The inspection device (10) according to claim 1 or 2, wherein the rotational drive device (20) and/or the longitudinal translation drive device (26) are manually operated mechanical devices.

4. The inspection device (10) according to any one of claims 1 to 3, wherein the rotational drive device (20) of the movable member (19) comprises a gripping member (30) projecting from the chassis (12) and fixed to a drive pinion (32), and a plurality of pinions (36) cooperating with said drive pinion (32) and the movable member (19) so as to drive the movable member (19) in rotation relative to the chassis (12).

5. The inspection device (10) according to any one of claims 1 to 4, wherein the movable member (19) is rotatable around the tubular element between a plurality of positions, the plurality of positions being between ten and twenty-four.

6. The inspection device (10) according to any one of claims 1 to 5, further comprising at least one indexing device configured to determine a position of the movable member (19) around the tubular element.

7. The inspection device (10) according to any one of claims 1 to 6, wherein the support (29) is movable in longitudinal translation relative to the movable member (19) between a plurality of positions.

8. A method for inspecting a weld of a hollow longitudinal tubular element using an inspection device (10) according to any one of claims 1 to 7, the method comprising the following steps:
- hooking and locking the chassis (12) on the tubular element using the hooking and locking device (14),
- displacing the movable member (19) at least once in rotation relative to the chassis (12) around the tubular element in an angular position, using the rotational drive device (20) and/or displacing the support (29) at least once in longitudinal translation relative to the movable member (19) in a longitudinal position, along the tubular element,
- acquiring a measurement using the sensor block (24) with eddy currents.

9. The method according to claim 8, comprising, for each angular position, successively displacing the support (29) in longitudinal translation along the tubular element in a plurality of longitudinal positions from a first end inspection position to a second end inspection position.
